Europäisches Patentamt

(19) European Patent Office

Office européen des brevets

(11) Numéro de publication:  **0 006 643**
**A2**

(12) **DEMANDE DE BREVET EUROPEEN**

(21) Numéro de dépôt: **79200009.3**

(22) Date de dépôt: **08.01.79**

(51) Int. Cl.³: **F 24 J 3/00,** F 24 D 11/00,
E 21 B 33/13

(30) Priorité: **10.01.78 IT 4758378**
**05.06.78 IT 4971978**
**25.09.78 IT 5121978**

(43) Date de publication de la demande: **09.01.80**
**Bulletin 80/1**

(84) Etats contractants désignés: **BE CH DE FR GB NL SE**

(71) Demandeur: **Fava, Francesco, Via Appia
Nuova 66, I-00183 Roma (IT)**

(72) Inventeur: **Fava, Francesco, Via Appia
Nuova 66, I-00183 Roma (IT)**

(54) **Echangeur de chaleur pour accumulateur de chaleur et accumulateur de chaleur à grande capacité et longue période de conservation; système de cimentation d'une nappe d'eau souterraine; parois extérieures d'immeubles et installation de chauffage.**

�λ Accumulateur constitué d'un grand volume de masse solide, tel que le sous-sol, dans lequel sont disposés un nombre d'échangeurs de chaleur, qui comportent chacun un premier tuyau en contact avec la masse du sous-sol, et un deuxième tuyau disposé à l'intérieur du premier. Système de cimentation ou engagement d'une nappe hydrique.

Parois extérieures d'immeubles comportant des couches d'isolation et des réservoirs plats (r, s) à circulation d'eau. Les réservoirs (r, s) font fonction de capteurs solaires et d'éléments pour le chauffage dans une installation de chauffage à basse température.

# DESCRIPTION

ACCUMULATEUR DE CHALEUR A' GRANDE CAPACITE' ET A' LONGUE PERIODE DE CONSERVATION.

## Introduction

On sait que, à cause de l'actuelle crise de l'éner gie, et par conséquent de son haut prix, beaucoup d'initia tives nouvelles ont été prises afin de trouver des sources alternatives et substitutives du pétrole.

Particulièrement importante la recherche dans le domaine des énergies à exploiter pour le chauffage; dans ce secteur, en effet, on dépense une quantité de chaleur équivalente à la troisième part du coût global annuel de l'énergie consommée en plusieurs Pays européens.

L'invention, expliquée ci-dessous, représente un moyen simple d'utilisation des couches souterraines pour l'accumulation de l'énergie solaire pendant l'été, et même de n'importe quel type de chaleur: les décharges des industries aussi bien que la décharge des installations pour le conditionnement de l'air.

On sait que la chaleur provenant du soleil est puissante et se répand si amplement qu'elle produit une opposition de phase entre sa disponibilité et son besoin effectif. Cela prouve que la chaleur solaire se rend pré cieuse justement lorsqu'elle devient insuffisante; d'autre part, au-delà d'une certaine limite, la chaleur devient dangereuse et l'on doit y prendre garde.

Dans cette situation il est évident que l'unique moyen de rendre utilisable, en grande quantité, l'énergie susdite, consiste à rendre utilisable son accumulation afin de l'utiliser à temps différents par rapport à l'époque où elle a été captée.

Beaucoup d'efforts ont été faits dans le dessein de parvenir à l'accumulation de la chaleur en grande quantité, mais sans aucun résultat pratique. ( Voir Ingersoll et Zobel: Heat conduction).

Rensegneiment et Principe Fondamental de l'invention.

L'eau représenterait l'élément idéal pour l'accumulation de la chaleur, en raison de sa chaleur spécifique élevée, de sa mobilité et même de son prix bas; mais son utilisation entraînerait la formation d'énormes depôts qui sont non seulement très couteux en soi, mais aussi par effet des caractéristiques que l'on devrait leur apporter.

Après avoir examiné les lois qui règlent la transmission de la chaleur, on pourrait aisément conclure que le procédé le plus économique, pour ce qui concerne l'accumulation de la chaleur, et même le plus profitable, consiste à utiliser simplement des couches sou terraines (argileuses, sablonneuses ou même alluvionnaires etc.), qui sont suffisamment énergétiques elles-mêmes à l'état naturel, ayant une température de 20-25 degrés environ.

Cela se rend possible par les raisons ci-dessous:

1°) La masse disponible de l'élément d'accumulation est très grande, même si sa capacité thermique spécifique au contraire n'est pas trop élevée. Mais la capacité thermique peut être augmentée en exploitant les couches les plus profondes en général, tenant compte que la masse est utilisée directement sur place.

2.°) Un accumulateur placé dans un certain volume du sous-sol, peut être considéré isolé thermiquement sur sa surface supérieure en raison de la basse conductivité spécifique des couches de terrain, tandis que, en adoptant des moyens particuliers, ce même accumulateur peut pratiquement être isolé soit latéralement soit dans la surface inférieure.

Cela dit, une fois qu'on a determiné l'élément qui doit garder la chaleur, le problème à résoudre est constitué par le mécanisme de l'échange thermique.

Mais, le mouvement de la chaleur dans le terrain se produisant lentement, le problème paraîtrait se résoudre aisément en disposant d'un certain nombre de puits à grand diamètre (afin de réaliser une vaste surface d'échange) et suffisamment profonds (par conséquent très coûteux) répartis à distance convenable dans la masse de l'accumulateur.

La solution serait en partie adéquate, si elle ne présentait le désavantage d'un coût d'installation excessif surtout pour la réalisation des puits.

La solution du problème apparaît toutefois sans aucune ambiguité tenant compte de la loi physique de l'écoulement de la chaleur en régime stationnaire au cours du temps dans un cylindre creux (soit en entrée, soit en sortie): loi qui est exprimée par la formule: $q_\ell = 2\pi\lambda\ell\Delta t / \ell n(r_e / r_i)$ où $r_e$ est le rayon du cylindre extérieur, $r_i$ celui de la cavité intérieure. Le mouvement de la chaleur à l'intérieur

- 4 -       0006643

d'un accumulateur se produit en régime. transitoire, mais on emploie la formule susdite (du régime station naire), parce qu'elle s'approche aux conditions-limites. Une fois que l'on a fixé le rayon extérieur $r_e$ de telle formule, on déduit que, si le rayon intérieur change, la quantité de chaleur débitée suit tels changements, mais en mesure beaucoup plus réduite; à l'aide de deux tuyaux enterrés, ayant le diamètre de o,06, on peut obtenir la chaleur d'un puits de 0,70 m. de diamètre.

Cela dit, il est évident qu'un échangeur calorifique formé par de nombreux petits tuyaux enterrés, ne dépasse pas les limites convenables, si l'on considère le bas prix d'enterrement des tuyaux, enterrement qui peut être réalisé par un modeste équipe - ment même si à une profondeur remarquable.

Unité d'échange thermique et accumulateur.

La chaleur parvenue au tuyau enterré verticalement (ou incliné) pourra ensuite être aisément recueillie par un système d'échange thermique de convection à circulation d'eau. Cet échange pourrait être réalisé au moyen de deux tuyaux.

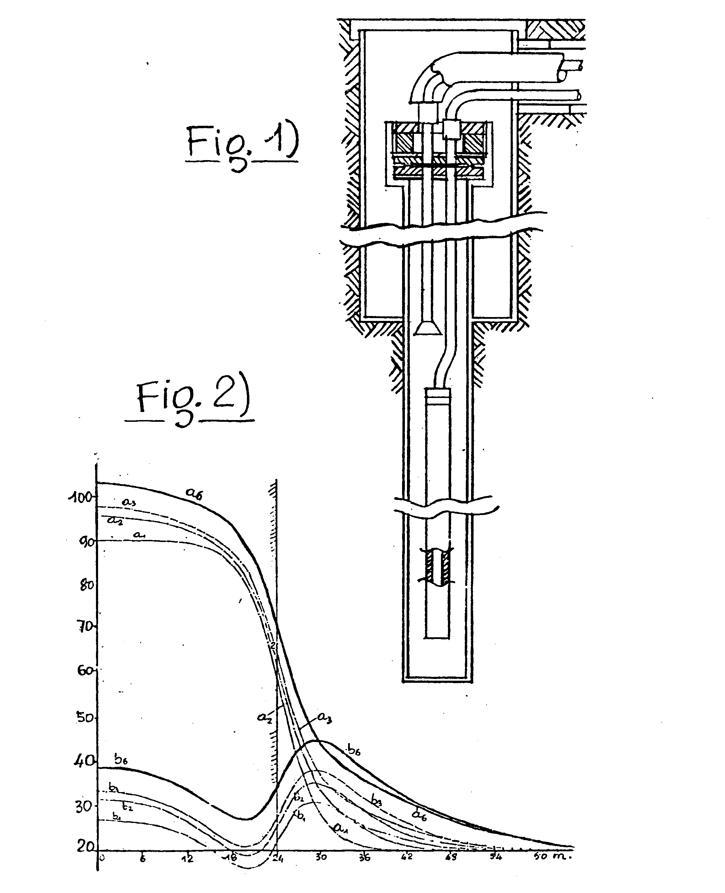

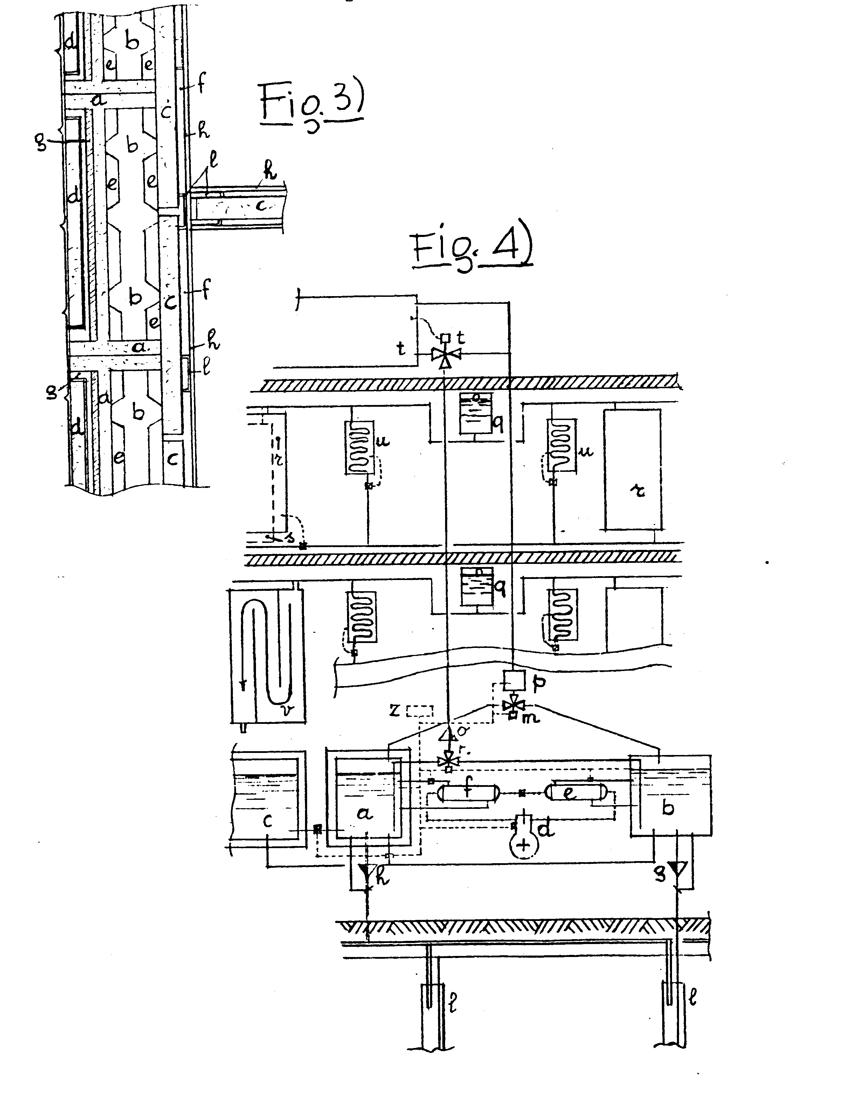

Dans la Fig. 1) le tuyau qui parvient à l'extrémité inférieure est placé à l'intérieur du tuyau échangeur dans une position à-peu-près axiale; ce tuyau échangeur doit être réalisé, si c'est possible, en matériaux isolants au point de vue thermique car plus l'isolation de telle conduite est élevée, plus haut pourrait en résulter le rendement thermique de l'échangeur.

Le système d'accumulation à grande capacité

0006643

peut être réalisé à l'aide d'un nombre plus ou moins élevé d'échangeurs unitaires distribués dans la masse de l'accumulateur à la profondeur la plus avantageuse; telle distribution pourrait être effectuée utilisant des mailles carrées ou triangulaires.

Les tuyaux échangeurs seront ensuite raccordés à une conduite collectrice par groupes, le mieux possible, amenant à une circulation qui pourrait être équilibrée à l'aide de vannes réglables placées opportunément. Le système pourra ensuite être contrôlé par procédé électronique.

Le chargement de l'accumulateur devra être fait en été, et , à la fin de la saison, pendant l'automne, c'est-à-dire peu de temps avant la phase d'absorption, on pourra, au moyen de la pompe de chaleur, effectuer la saturation de l'accumulateur grâce au prélèvement de chaleur à basse température à l'aide des échangeurs du périmètre et à l'introduction de la chaleur (c'est-à-dire l'équivalent thermique du travail plus la chaleur de refroidissement du moteur) dans la partie centrale de l'accumulateur.

Telle opération pourrait prolonger la période d'alimentation directe de l'installation, sans intervention de la pompe de chaleur; naturellement les avantages devront être confirmés par l'expérience.

Pour prélever la chaleur d'un seul groupe d'échangeurs il suffira d'envoyer toute l'eau froide provenant de l'évaporateur de la pompe de chaleur à l'extrêmité la plus basse des échangeurs du groupe. L'installation, ainsi articulée, devrait présenter une flexibilité excellente en tout genre de régula= tion; d'autre part on peut interrompre le débit sans déperdition de chaleur ; on amène à un nivellement

des températures qui prédispose l'accumulateur à améliorer sa capacité de débit.

La disponibilité horaire de chaleur fournie par l'accumulateur se caractérise positivement par sa durée de 24 heures sur 24; alors que la demande s'atténue (suspension nocturne du chauffage) tenant compte de cela et, en même temps, afin de rendre possible l'absorption de la chaleur débitée par les collecteurs solaires au cours de la journée, il suffira d'associer opportunément au système un réservoir hydrique à capacité convenable et à isolation excellente, propre à absorber les pointes journalières de la charge thermique (soit en entrée, soit en sortie). Ce réservoir livrera l'excès de chaleur correspondant à l'accumulateur dans les heures qui suivent.

La Fig. 2) représente graphiquement les isochrones réelles d'un accumulateur ayant un rayon de 24 mètres. Les caractéristiques thermophysiques du terrain considéré (argileux, profond, humide) dans le système de mesure: mètres, kg, heures, kcal, sont: $\lambda = 2$, $\gamma = 1800$; C = 0,222; diffusion: a = 0,005.

Telles isochrones de la température, au long du rayon, sont le résultat de l'équation complète de Fourier suivant les accroissements finis des variables, èt tenant compte que la subdivision du terrain est faite par couches planes.

Ce résultat, obtenu à l'aide d'un calculateur électronique, pendant une période simulée de 6 ans, prouve qu'une barrière thermique se produit près du volume d'accumulation, favorisant l'accumulation de la chaleur, même en régime de températures élevées.

Dans la même figure on a indiqué les isochrones maximum et minimum de charge au cours du premier, second et sixième an, respectivement par:

$a_1$, $a_2$, $a_6$, et $b_1$, $b_2$, $b_6$

A l'aide des simulateurs mathématiques qui calculent les déperditions thermiques de la surface totale du volume d'accumulation, il est possible de déduire le rendement du système; c'est-à-dire la quantité de chaleur obtenue dans la phase d'absorption (hiver), qui est exprimée comme quote-part de la chaleur accumulée dans la phase précédente; cette valeur, approximativement de 0,3 à 0,9, augmente sensiblement si l'on utilise une pompe de chaleur durant le temps final de la phase d'absorption, ou autrement en passant des petits accumulateurs jusqu'aux grands; cette valeur augmente encore au fur et à mesure que les années de fonctionnement passent.

Equations fondamentales pour le calcul des installations thermiques thermodynamiques, par absorption de la chaleur du terrain, avec ou sans accumulation précédente.

Les grandeurs fondamentales d'une installation de chauffage thermodynamique sont interdépendantes; c'est-à-dire elles sont liées par des relations grâce auxquelles il est possible de déduire d'une manière univoque les inconnues indépendantes.

Telles grandeurs sont: la surface des collecteurs solaires S; la chaleur R qui provient du refroidissement du moteur endothermique d'actionnement de la pompe de chaleur (qui permet de calculer la consommation du combustible); la puissance moyenne $N$ dégagée par tel moteur durant la période complète de chauffage; la chaleur $E$ réalisable en été grâce aux collecteurs solaires (se rapportant au climat de Rome: sept mois d'inactivité de l'installation de chauffage); la chaleur $I$ réalisable pendant les autres 5 mois qui suivent grâce aux mêmes collecteurs: période d'activité de l'installation; la chaleur $C$ de déchargement de l'installation de conditionnement estival réalisable au condensateur de la pompe de chaleur, fonctionnant à installation frigorifique; la déperdition moyenne de chaleur $D$ de l'immeuble relative à la période d'activité de l'installation; la chaleur $T$ prélevée - le cas écheant- de la charge énergétique propre au sous-sol (la partie-aliquote cédée à l'accumulateur dans le temps d'inactivité de l'installation n'y rentre pas).

Les relations susdites, tenant compte d'une dispersion éventuelle du 10% de la chaleur accumulée, sont les suivantes:

1)  $D-I-R = 1,10 \ (E + C) + T$

2)  $\beta (E + C) + T = r \quad x \ Nx632,5x24x150$

3)  $R = N \times 632,5 \times 24 \times 150 \times 0,7 / 0,3$

où $\beta$ représente la partie-aliquote de chaleur fournie par l'installation de chauffage à travers la pompe de chaleur; étant donné que la partie-aliquote $(1-\beta)$ est fournie à l'installation directement par l'accumulateur sans passer par la pompe de chaleur . Cela peut se vérifier en mesure plus grande dans les installations aérothermiques où la température du fluide (air) n'est pas élevée (30°); $r$ représente l'efficacité de la pompe de chaleur: c'est-à-dire: $1 / (( T_2 / T_1 - 1) + 1)$

où $T_2$ et $T_1$ sont les températures absolues du fluide frigorigène chez le condensateur et chez l'évaporateur.

Le rendement thermodynamique du moteur endo - thermique d'actionnement de la pompe de chaleur a été désigné par 0,3; 632,5 constitue l'équivalent thermique de HP - heure, et 150 sont les jours d'activité du chauffage.

La formule 1) exprime le bilan énergétique de l'accumulateur; la 2) c'est la relation qui lie la puissance moyenne développée pendant toute la période d'activité de la pompe de chaleur, à la quantité de chaleur totale prélevée de l'accumulateur. La 3) exprime la chaleur de déchargement du moteur endothermique de la pompe de chaleur (par refroidissement) en fonction de N.

La puissance maximum de la pompe de chaleur constitue une valeur indépendante de N qui doit être calculée par une relation du genre 2) prenant pour point de départ la demande horaire maximum de chaleur. Si l'on admet que D est une grandeur connue, les inconnues sont R, N, tandis que la surface du collecteur solaire S est exprimée par la formule avec l'introduction des rapports suivants: la chaleur solaire est exprimée par S x e où e représente la chaleur que l'on peut obtenir pendant les 7 mois les plus chauds de l'année par un mq. de collecteur; tenant compte de l'efficacité autant que de la favorable inclinaison des collecteurs par rapport à la direction moyenne des rayon solaires la chaleur vaudra - au moins relativement au climat de Rome - $1,1 \times 10^6$ kcal.

D'une manière analogue $\underline{I} = \underline{S} \times i = 0,25$ $\underline{S} \times \underline{e} = 0,25 \times 1,1 \times 10^6 \times \underline{S}$; et, introduisant deux coefficients $k_1$ et $k_2$ qui désignent respectivement $\underline{C}$ et $\underline{T}$ comme aliquotes de $\underline{E}$, les trois expressions permettent de déduire les valeurs des inconnues $\underline{S}$, $\underline{R}$, $\underline{N}$, pour n'importe quelle disposition fonctionelle de l'installation (ex. dans le cas où il n'y a pas de conditionnement $C = O$, dans le cas où l'on ne relève pas de la chaleur accumulée $E = O$ alors que $\underline{T}$ assume un rang préeminent; dans le cas où il n'y a pas d'alimentation directe entre l'accumulateur et l'installation thermique: $\beta = 1$ etc.

Afin que l'on puisse concrétiser par des éléments numériques et en même temps faire des comparaisons visant à prouver l'économie de combustible, on a considéré le cas d'un immeuble de 8 étages à Rome: 4 appartements par étage (total 32 unités immobilières) ayant une dispersion de 240.000 kcal / h sous un un saut thermique: $\Delta t = 20°$.

Assumant $\Delta t = 10°$ comme saut thermique saisonnier moyen , on voit que, tenant compte de l'atténuation ou arrêt nocturne du chauffage, sa valeur effective en devient: 8 degrés. Par conséquent le besoin annuel en devient $24 \times 150 \times 240.000 \times 8 : 20 = 346 \times 10^6$ kcal / h.

Partant des équations fondamentales susmentionnées, on a obtenu, en 4 cas, les résultats suivants:

1° cas: supposant le chauffage à eau: température $50°$

degrés au condensateur de la pompe de chaleur et 4 degrés chez l'évaporateur; $r$ théorique résulte 7, mais on prend la valeur effective 5 ; ce cas prévoit que le 25% de la chaleur de l'accumulateur soit fourni directement à l'installation thermique, c'est-à-dire sans passer par la pompe de chaleur ($\beta$ = 0,75); dans ce cas le conditionnement de l'air n'est pas prévu (C = 0) et de même on ne présume pas un prélèvement calorifique, de la charge énergétique propre au sous-sol ( T = 0 ); on obtient: $\underline{N}$ = 13, 408 HP; S =185mq ( 5,7 mq par appartement ); $\underline{R}$ = 71,20 x $10^6$ kcal. La consommation de gas-oil sera $\underline{R}$ / (0,7 x 10.200 ) = 9.977 kg.

Dans un système traditionnel de chauffage à combustion, désignant le rendement de la combustion par 0,8, la consommation du gas-oil serait 346 x $10^6$/ ( 0,8 x 10.200 ) = 42, 402 kg; l'économie serait de 32.425 kg, égal au 76%; la chaleur qu'il faut accumuler en été est seulement la chaleur solaire de: 1,1 x $\underline{S}$ x 1,1 x $10^6$ = 223,85 x $10^6$ kcal/. Il est toutefois convenable de prévoir un réservoir hydrique d'absorption des pointes journalières de la demande, afin de déduire la puissance maximum de la pompe de chaleur; la demande horaire maximum - y prévu un arrêt nocturne de l'activité pendant 8 heures - devient : 240.000 x 16 : 24 = 160.000 kcal / h à laquelle correspond une puissance maximum de 34,5 HP de la pompe de chaleur.

2° cas: comme le cas précédent, sauf on y exclut que le chauffage direct puisse se produire sans l'in tervention de la pompe de chaleur, c'est-à-dire: $\beta = 1$

On a: $\underline{N}$ = 16,73 HP; $\underline{S}$ = 173 mq (5,4 mq. par appartement ) $\underline{R}$ = 88,89 x $10^6$ kcal; le besoin annuel de gas-oil est de 12,449 kg. et, d'après le critère du cas précédent, l'économie de gas-oil est de 29.953 kg égal au 70%. La chaleur que l'on doit accumuler est celle précédente (solaire estivale) de 223,85 x $10^6$ kcal.

3° cas: Comme le précédent, sauf une installation de conditionnement estival dont la chaleur de déchargement de l'accumulateur correspond à 1/3 de celle solaire estivale. L'absorption propre à la chaleur du sous-sol (T = 0 ) est exclue et il n'y a pas d'alimentation directe à l'installation ($\beta = I$ ); on a $\underline{N}$ = 17,33 HP; $\underline{S}$ = 134,5 mc; $\underline{R}$ = 92,07 x $10^6$kcal; consommation de gas-oil 12.895 kg; économie annuelle 29,507 kg. égal au 69%; chaleur que l'on doit accumuler 1,1 x 1,1 x 134,5 x $10^6$ x 4:3 = 217 x $10^6$ kcal. Dans ce cas, comme il était facile à prévoir, la surface des collecteurs solaires y est remarquablement réduite de 185 à 134 mq.

4° cas: Même immeuble, même dispersion de chaleur $\underline{D}$, mais sans accumulation de chaleur estivale (c'est-à-dire sans collecteurs solaires), avec absorption de' toute la chaleur du sous-sol. Dans ce cas il faudra employer un liquide intermédiaire qui atteint des températures de 10÷12 degrés négatifs; en outre il faudra adopter une telle disposition des échangeurs propre à permettre le retour en été de la chaleur absorbée au sous-sol.

Supposant le chauffage à air (t = 27 ÷ 28°), la valeur théorique de r résulte 7,57 et l'on prend la valeur réelle de 5; on a une consommation de gas-oïl de 15.406 kg., avec une économie de 20.996 kg. égale au 64%; N = 20,72 HP, T = 233 x $10^6$ kcal, R = 110 x $10^6$ kcal. La puissance maximum de la pompe de chaleur est celle prévue au cas n° 1), c'est-à-dire 34,5 HP.

Calcul de l'accumulateur de chaleur.

On obtient le dimensionnement de l'accumulateur par deux équations fondamentales. La première se déduit de l'égalité entre la chaleur totale que l'on doit accumuler: Q et la capacité d'accumulation par le produit: $\gamma$. c. V$\Delta$'t (respectivement: poids spécifique du terrain dans son état sur place, désigné par 2.200 kg / mc, sa chaleur spécifique, désignée par 0,2 kcal/ /kg° C, volume accumulateur V, $\Delta$'t, saut thermique que l'on veut adopter (30°), outre la température propre au terrain estimée à 25°; on obtient la deuxième égalisant le débit horaire maximum de chaleur q (requis par l'installation thermique) au même débit que l'on peut obtenir de l'accumulateur égal à $2\pi\lambda$ x n l x $\Delta$"t / l n ($r_e$ / $r_i$) où $\lambda$ est la conductivité spécifique du terrain en profondeur, prise égale à 2,2 kcal / h x m x degré; n est le nombre des tu – yaux échangeurs; l est leur longueur ; $\Delta$"t est le saut thermique minimum actuable - sous lequel on peut demander toutefois le débit maximum de chaleur - $r_e$ le rayon extérieur équivalent du cylindre creux destiné à débiter la chaleur; $r_i$ le rayon du tuyau échangeur qui a été choisi. $\Delta$"t représente le saut ther mique qui peut se vérifier lorsque l'accumulateur est presque déchargé c'est-à-dire - tenant compte du climat de Rome - après le 15 mars.

Considérant les sauts thermiques $\Delta't$ et $\Delta''t$ en 30° ( et respectivement température maximale de l'accumulateur: 25°+ 30° = 55°), le système de deux équations susdites, après une substitution de varia - ble, se résout dans les expressions suivantes:

- pour la distribution carrée:

$$H \times \exp 829,38 H / q = Q\beta^2 / 13.200 \text{ où } \beta = 0,564: r_i$$

$$a = \sqrt{Q / 13.200 H}$$

$$r_e = 0,5642 \sqrt{Q / 13.200 H}$$

pour la distribution triangulaire équilatérale:

$$H \times \exp 829,38 H / q = Q\alpha^2 / 5761,6$$

où: $\alpha = 0,371 : r_e$

$$b = \sqrt{Q / 5761,6 H}$$

$$r_e = 0,371 \sqrt{Q /5701,6 H}$$

D'après les exemples précédents, concernant un accumulateur relatif à un bâtiment de 32 appartements à Rome, on trouve que la distance horizontale entre les tuyaux est de m. 3,37.

Si l'on avait à disposition un sous-sol caracté- risé par la présence de nappe d'eau, on devrait procéder à cimenter la nappe susdite suivant les techniques utilisées normalement dans ce genre d'opération.

Si le sous-sol est d'origine alluvionnaire, c'est-à-dire caractérisé par un haut pourcentage d'eau libre, mais croupissante, on aurait de bonnes raisons de croire que la réalisation d'un tel accumu- lateur se passe sous des conditions nettement convenables; en effet l'eau confère au sous-sol une capacité thermique décidément plus élevée et, en même temps, une dispersion inférieure, étant donné qu'il n'y a pas de transmission par convection et que l'eau possède un coefficient de conductivité spécifique beaucoup moindre que celui du terrain profond (0,6 contre 2); l'accumulateur se réduirait peut être de dimension et l'accumulation saisonnière de la chaleur serait également possible et probablement ameliorée.

L'Installation de chauffage à basse température et refroidissement estival au moyen de l'accumulateur

L'accumulateur saisonnier placé dans le sous-sol ayant une grande capacité d'accumulation, doit être servi par une grande surface de collecteurs solaires estivals. Si l'on désire avoir une grande quantité de chaleur en hiver, on doit garder l'eau d'alimentation des tous les tuyaux échangeurs à la température la plus élevée possible, 24 heures par jour durant six ou sept mois.

En cas qu'on ne veuille pas réaliser cette condition, on pourrait avoir également un bon rendement, se servant de petits accumulateurs, à l'aide d'une pompe de chaleur. On pourra de même se passer de la pompe de chaleur, en douant les édifices d'un système de chauffage à basse température.

On a étudié un système particulier de chauffage afin de permettre la pleine utilisation de l'accumulateur. Ce système prévoit une réalisation des parois extérieures et intérieures du batiment (en préfabrication) composées par des couches à grande isolation

thermique obtenue par vides, et, caractéristiques essentielle, il est pourvu de réservoirs plats à circulation d'eau placés dans l'épaisseur de la parois même. On pourrait ainsi obtenir une grande surface d'échange thermique par laquelle on rend possible un faible débit hydrique dans les réservoirs plats, une basse température de l'eau en circulation et une inertie thermique de la même grandeur qu'on relève d'habitude chez les constructions traditionnelles, bien que la dispersion thermique soit inférieure de la moitié.

La figure 3) représente une section de la parois extérieure susdite et les couches différentes y figurent selon l'ordre suivant:

a) structure des supports en béton armé; b) élément de matériau caractérisé par une qualité d'isolation thermique (v. liège, polystirène expansé etc.); réservoirs plats en plastique, ou en tôle pour le chauffage à basse température; réservoirs plats collecteurs solaires (pourvus ou non de vitre antérieur); e) vides d'isolation ; f) air pour la transmission thermique de chauffage par convection; g) encore de petites couches d'isolation ( feutre ou air) ; h) revêtement intérieur en planches de bois; l) éléments d'entretoisements et de soutien en tôle.

L'installation de chauffage de l'édifice est réalisée par la même eau de circulation des tuyaux échangeurs de l'accumulateur, mais en utilisant deux ou plusieurs réservoirs interposés, respectivement l'un pour l'eau froide et l'autre pour celle chaude. Ne pouvant pas supporter aucune pression, les réser - voirs plats structurés à l'intérieur des parois (de même que les collecteurs solaires), sont alimentés au moyen d'un petit réservoir d'étage à niveau constant, réglé par une bulle d'air. Si le dimensionnement de l'accumulateur est excéssif, on pourrait procéder au refroidissement estival du batîment, afin de conférer aux pièces une température plus basse et, en même temps, préchauffer l'eau d'alimentation des collecteurs solaires.

Ce type d'installation est représentée dans la Fig. 4) et se compose des éléments suivants: a) réservoir pour l'eau chaude; b) réservoir pour l'eau froide; c réservoir chaud auxiliaire (pour l'accumulation de l'excès de chaleur journalier soit en entrée soit en sortie); d) éventuelle pompe de chaleur; e) évaporateur et condensateur; g) h) pompes de circulation hydrique de l'accumulateur; e) accumulateur saisonnier nappes à trois voies: pour la circulation hydrique de l'installation thermique (du genre à zone primaire - secondaire); o) pompe de circulation de l'installation de chauffage et refroidissement; p) petit puits de déchargement de l'eau de retour de l'installation thermique; q) bassinets d'étages à niveau constant; r) s) réservoirs de chauffage et réservoirs collecteurs solaires structurés dans la parois; t) système collecteur solaire indépendant des structures; n) boiler à eau pour un usage domestique; v) particulier du réservoir structuré et sens de circulation de l'eau; z) éventuel petit électronique central d'actionnement et de réglage. En cas que l'on prévoie aussi le refroidissement estival, on pourrait avoir les trois moyens de fonctionnement ci-dessous:

- Fonctionnement en hiver: pendant le chauffage la pom pe g) envoie l'eau à l'extrêmité profonde des échangeurs; l'eau montant lentement le long du tuyau se ré chauffe et alimente le réservoir chaud a); l'eau passe ensuite aux bassinets d'étages q) à travers la pompe o) et la nappe à trois voies n). Les bassinets d'é tage alimentent soit les réservoirs plats r) soit les collecteurs solaires s); l'eau rentre ensuite à la conduite de déchargement; et, passant par le petit puits p) par m) et par le réservoir b) elle recommence son cycle.

- Fonctionnement intermédiaire: au cas où une journée de plein soleil se présente, les collecteurs solaires s) et t) enverraient de l'eau chaude au petit puits p); un thermostat spécial en p), s'élevant la tempéra ture de l'eau à 23 - 25°, entraînerait la commutation de la nappe n) qui, au lieu de décharger l'eau en b) la déverserait dans le réservoir de provenance a); dans ce rangement toute la chaleur solaire reçue serait utilisée immédiatement pour le chauffage de l'immeuble.

- Fonctionnement estival: au cas que la température de l'eau dans le réservoir chaud a) se soit élevée à cause du déchargement excéssif de chaleur des collecteurs solaires, un thermostat spécial commuterait la nappe n) de manière que les bassinets d'étage soient alimentés par le réservoir froid b) en versant l'eau de re tour dans le réservoir chaud; au-delà d'une certaine limite de température dans ce réservoir, un thermostat spécial fait fonctionner la pompe h) en faisant circuler l'eau dans l'accumulateur saisonnier, qui se met en marche exactement,dans ce cas, dans la phase d'accumulation de chaleur: c'est-à-dire sa performance estivale.

On peut faire intervenir la pompe de chaleur d) , par des thermostats analogues, pour refroidir l'eau du réservoir froid et en même temps pour rechauffer celle du réservoir chaud.

0006643

## REVENDICATIONS

Je revendique :

1) l'echangeur de chaleur unitaire constitué d'un tuyau
(qui peut être substitué de même par un trou) à contact
avec le terrain du sous-sol, à l'interieur duquel un deu
xième tuyau est placé; ce dernièr tuyau pourra aussi
être placé à l'extérieur de l'échangeur à la condition
qu'il se trouve dans la même coulée de beton.

L'échangeur se caractérise par un double sens de
circulation de l'eau ou d'un autre fluide intermediaire.
Une autre caractéristique du système consiste dans la di
sponibilité pour l'accumulation d'un grand volume de materiau solide sans le déplacer - c'est-à-dire sur place -
à l'aide d'une petite surface d'échange thermique (tuyau
échangeur);

2) l'accumulateur général est constitué d'un nombre plus ou
moins haut d'échangeurs unitaires distribués uniformement dans le volume d'accumulation, à une distance l'un
de l'autre variable jusqu'à quelque 3-4 mètres; l'accumu
lateur est alimenté par un double réseau horizontal respectivement d'eau chaude et d'eau froide.

Le système se caracterise par: a) les éléments unitaires d'accumulation (échangeur et son cylindre ideal
d'accumulation) s'isolent réciproquement en diréction ho
rizontal; b) la dispersion de long du perimètre pourrait être minimisée par un cercle d'échangeurs alimentés par un circuit séparé; cela rend plus flexible l'utilisation de l'accumulateur;

3) système de cimentation ou engorgement d'une nappe hydrique eventuelle qui puisse interesser le volume d'accumulation;

4) parois extérieure d'immeubles réalisées: a) par une element structurel de support; b) par des differentes couches de materiau d'excellente isolation thermique et par des couches d'air; c) par des réservoirs plats à circulation d'eau; d) par des révetêments interieurs éspacés afin de consentir la circulation de l'air de chauffage (convection). Les parois sont caracterisées par une double série de réservoirs plats intérieurs en fonction d'éléments pour le chauffage de même que de collecteurs solaires. Les réservoir plats sont alimentés à la fois par la même installation thermique.

5) Installation de chauffage à basse température alimentée par l'accumulateur saisonnier à l'aide de 3 réservoirs intermédiaires et de pompes; l'installation se sert des réservoirs structurés à l'intérieur des parois (v.n°4) en éléments d'échange thermique avec l'ambiant.

Caractéristiques principales: a) l'alimentation des réservoirs plats se verifie à pression atmosphérique au moyen de bassinets à niveau constant par étage; b) introduction des réservoirs plats en fonction de collecteurs solaires dans la structure de la parois extérieure.

(Francesco Eava)

Fig. 1)

Fig. 2)

0006643

Fig. 3)

Fig. 4)